# EUROPEAN PATENT SPECIFICATION

(11) **EP 3 210 877 B1**
(45) Date of publication and mention of the grant of the patent: **21.11.2018**
(21) Application number: 16157051.0
(22) Date of filing: 24.02.2016
(51) Int. Cl.: B63H 21/30, F16F 1/373, F01P 11/10

(54) **A MOUNTING STRUCTURE IN A COOLING UNIT OF AN ELECTRICAL MACHINE AND METHOD FOR MANUFACTURING MOUNTING STRUCTURE**
HALTERUNG IN EINER KÜHLEINHEIT EINES ELEKTRISCHEN GERÄT UND VERFAHREN ZUR HERSTELLUNG DER HALTERUNG
STRUCTURE DE SUPPORT DANS UNE UNITÉ DE REFROIDISSEMENT D'UNE MACHINE ÉLECTRIQUE ET PROCÉDÉ DE FABRICATION DE LA STRUCTURE DE SUPPORT

(43) Date of publication of application: 30.08.2017
(73) Proprietor: ABB Schweiz AG, 5400 Baden (CH)
(72) Inventor: Salmi, Mikko, 00380 Helsinki (FI); Vainio, Ilkka, 00380 Helsinki (FI)
(74) Representative: Kolster Oy Ab

(56) References cited:
- EP-A1- 1 143 125
- EP-A1- 2 058 156
- US-A- 1 872 259
- US-A- 4 559 995
- US-A- 5 890 460

## Description

### FIELD OF THE INVENTION

The invention relates to a mounting structure in a cooling unit of an electrical machine, and more particularly to a solution for reducing vibration in a cooling unit of an electrical machine.

### BACKGROUND OF THE INVENTION

An electrical machine generates heat in its various parts because of mechanical losses, magnetic losses and electrical losses. This excess heat has to be removed. The heat is often transferred to a cooling fluid which is circulated in the electrical machine and then cooled in a separate cooling unit after which it is returned back to the electrical machine.

As the cooling fluid circulates inside the electrical machine the entrance of dirt, dust and water to the cooling unit has to be restricted. The mounting of the cooling unit to the electrical machine needs to fulfil enclosure protection requirements specific to each application. A common solution is to provide a sealing strip to block the gap between the frame of the cooling unit and the frame of the electrical machine. The installation of the sealing strip is time consuming and the obtainable enclosure protection with the sealing strip is limited.

Ships often employ electrical generators connected to diesel engines to provide auxiliary power for lights, fans, winches and also for main propulsion. The vibrations originating from diesel engine are transferred to the cooling unit through the electrical machine connection and through a shared mounting plate of the diesel engine and the electrical generator. US 1872259A discloses a pair of substantially cup shaped metallic members. The two members are fastened together. Each of the members is provided with means of connection to relatively movable parts, EP 2 058 156 A1 discloses a sealing system for sealing a heat exchanger assembly to an HVAC module.

A cooling unit of an electrical machine is typically installed on the top of the electrical machine. The vibrations transferred from the mounting plate of the electrical machine and from the electrical machine accumulate to the cooling unit causing vibration in the housing and in the heat exchanger of the cooling unit. These mechanical vibrations have to be reduced to comply with the vibration tests and to decrease the maintenance costs.

A common solution for reducing vibrations is to use vibration dampers. However, the dimensioning of the vibration dampers for the cooling unit requires high tolerances as the flexible sealing strip between the cooling unit and the electrical machine frames carries also loads and transfers vibrations.

In a marine application the electrical machine, electrical motor or electrical generator, have to pass also a tilt test. Therefore also the cooling unit connected to the electrical machine has to be provided with a tilt limiting system to be capable of passing the tilt test performed to the electrical machine.

The drawback with the previous solutions for reducing vibrations of the cooling unit of the electrical machine is the high number of stages of manufacture and the manufacturing costs together with the restricted enclosure protection class for the cooling unit.

### BRIEF DESCRIPTION OF THE INVENTION

An object of the present invention is to solve the above mentioned drawbacks and to provide a simple and efficient solution for reducing vibration in a cooling unit of an electrical machine.

This object is achieved with a mounting structure in a cooling unit of an electrical machine according to independent claim 1.

The mounting structure in a cooling unit of an electrical machine for reducing vibration comprises a first frame, a second frame, at least one damping device, and an insulating fabric configured to stay non-tensioned. The damping device and the insulating fabric are fitted between the first and the second frame. The damping device and the insulating fabric are attached to the first frame and to the second frame, the insulating fabric is non-load bearing. The damping device is forming a flexible connection between the first and the second frame and is capable of limiting tilt between the first and the second frame.

An advantage of the invention is that it reduces the number of stages of manufacture and the manufacturing costs. The invention also provides a high protection from dirt, dust and water to the cooling unit.

The preferred embodiments of the invention are disclosed in the dependent claims.

### BRIEF DESCRIPTION OF THE DRAWINGS

In the following the invention will be described in greater detail by means of preferred embodiments with reference to the accompanying drawings, in which
Figure 1 shows a cooling unit with a mounting structure;
Figure 2 shows a mounting structure;
Figure 3 shows a cross-section of the mounting structure of Figure 1;
Figures 4a-b shows a damping device;
Figure 5 shows the cooling unit with the mounting structure connected to an electrical generator;
Figure 6 shows an electrical generator connected to a diesel engine with a cooling unit with a mounting structure.

### DETAILED DESCRIPTION OF THE INVENTION

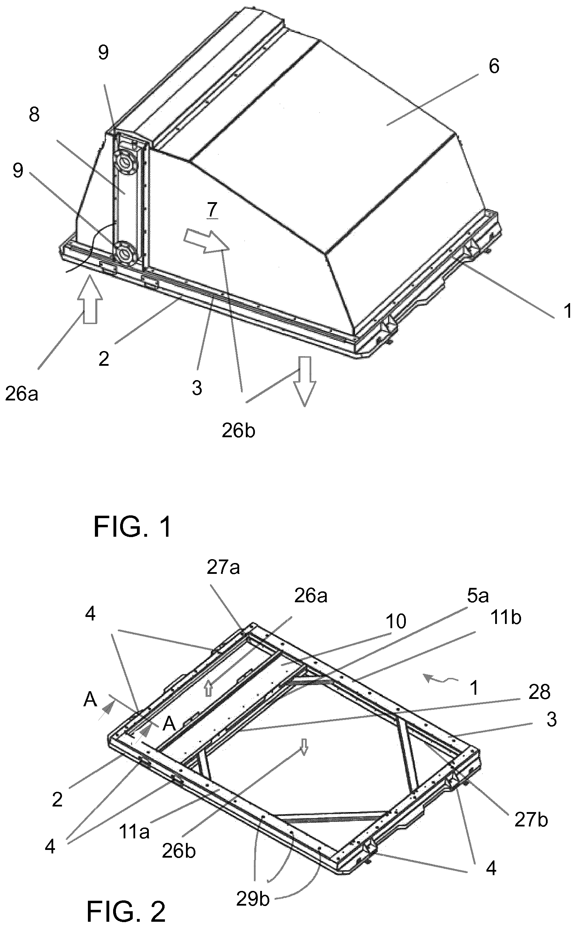

Figure 1 shows a cooling unit with a mounting structure 1. The mounting structure 1 comprises a first frame 2 and a second frame 3 placed on top of each other. The cooling unit 6 is arranged on the top of the second frame 3. The cooling unit 6 comprises a housing 7 and a heat exchanger 8 within the housing. The housing 7 of the cooling unit 6 is fixed to the second frame 3.

The cooling unit 6 can comprise more than one heat exchangers 8. The most common heat exchanger types are tube-and-shell heat exchangers and plate heat exchangers. The heat exchanging fluids used for an electrical machine are typically gaseous and/or liquid, e.g. air and water. Electrical generators connected to diesel engines use often air as the cooling fluid within the electrical machine, i.e. in the internal circulation, and liquid as a cooling fluid in the external circulation which cools down the air of internal circulation.

The heat exchanger 8 divides the housing 7 into two sections. The cooling fluid 26a heated in the electrical machine 12 enters to the first section of the housing 7 from the bottom of the cooling unit 6 through the attached first and second frames 2, 3. The cooling fluid 26a flows through the heat exchanger 8 where it is cooled by the external cooling liquid to the second section of the housing 7. In the heat exchanger cooled cooling fluid 26b leaves the cooling unit 6 from the bottom of the cooling unit 6 on the second section's side. The cooled cooling fluid 26b flows through the attached first and second frames 2, 3 back to the electrical machine 12. The inlet and outlet 9 of the heat exchanger 8 for an external liquid cooling fluid are shown in the Figure 1.

Figure 2 shows a mounting structure 1 in a cooling unit of an electrical machine for reducing vibration. The mounting structure 1 comprises a first frame 2 and a second frame 3. The frames 2, 3 are of rectangular shape and comprise four sides. The first frame 2 and/or the second frame 3 comprises a carrier beam 10 extending between two sides 11a-b of the corresponding frame for carrying a heat exchanger 8. In Figure 2 the vertically upper frame, the second frame 3 comprises the carrier beam 10 for the heat exchanger 8. The carrier beam 10 divides the opening inside the frames 2, 3 into two parts. An insulating fabric 5a configured to stay non-tensioned is arranged to seal the vertical gap between the lower surface of the carrier beam 10 and the level of the lower surface of the first frame 2. The insulating fabric 5a can be attached to the carrier beam 10 by pressing the fabric 5a between a flat iron bar and the carrier beam 10. The vertically lower edge of the insulating fabric 5a can be attached to a fixing beam 28 extending between two sides 11a-b of the first frame 2 underneath the carrier beam 10, for instance, with a flat iron bar. The insulating fabric 5a is fitted between the carrier beam 10 and the fixing beam 28. The insulating fabric 5a forms a wall and prevents the cooling fluid 26a from passing under the heat exchanger 8 without entering the housing 7.

The insulating fabric 5a surrounding the opening defined by the first 2 and the second 3 frames and the insulating fabric 5a extending underneath the carrier beam 10 form inlet 27a and outlet 27b channels for the cooling fluid 26a-b. The cooling fluid 26a which is heated in the electrical machine 12 flows through the inlet channel 27a to the housing 7 of the cooling unit 6. The cooling fluid 26b which is cooled in the heat exchanger 8 flows from the housing 7 through the outlet channel 27b to the electrical machine 12. The insulating fabric 5a fitted between the carrier beam 10 and the fixing beam 28 is preferably similar to the insulating fabric 5 fitted between the first 2 and the second frame 3.

The mounting structure shown in Figures comprises 8 pcs of damping devices 4. Two damping devices 4 are installed between the first 2 and second frame 3 at each side 11a-d.

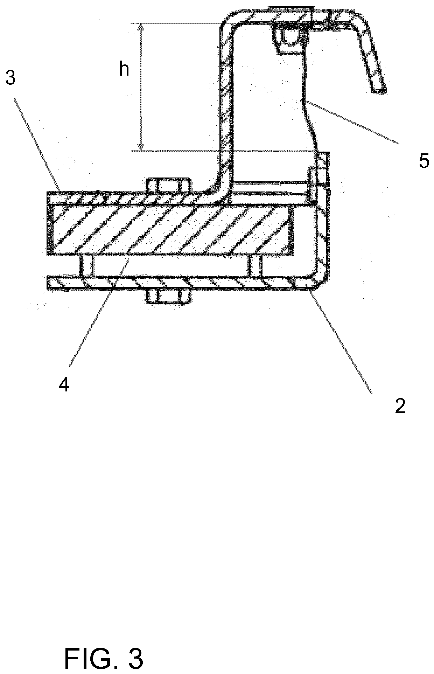

Figure 3 illustrates a cross-section of the mounting structure 1 of Figure 2 along line A-A. A damping device 4 is fitted between the first 2 and the second frame 3 of the mounting structure 1. The damping device 4 is fixed to the first frame 2 and to the second frame 3. The damping device 4 forms a flexible connection between the first 2 and the second 3 frame.

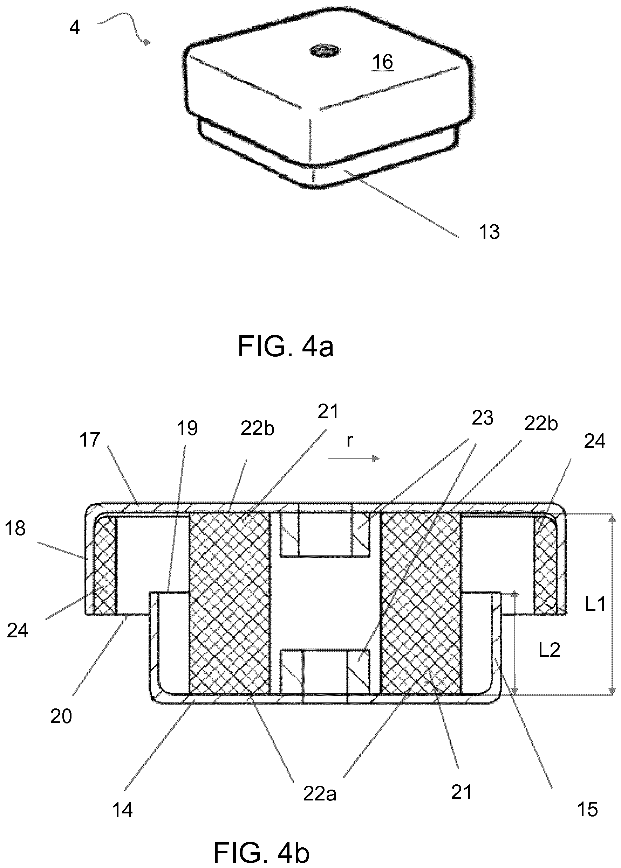

The flexibility of the damping device 4 creates the vibrational isolation between the electrical machine and the cooling unit 6. The damping device 4 damps the vibration by using the flexible properties of the damping elements 21, 24 (see Figure 4b).

The insulating fabric 5 seals the vertical gap between the first 2 and the second frame 3. It keeps the cooling fluid flowing through the mounting structure 1 separate from the surrounding air. The insulating fabric 5 also prevents dust, dirt and water from entering to the cooling fluid circulation in the electrical machine and the cooling unit 6.

The insulating fabric 5 is attached to the first frame 2 and to the second frame 3.

The insulating fabric 5 is configured to stay non-tensioned and is non-load bearing. Therefore the insulating fabric does not to carry forces or transfer vibrations from the first frame 2 to the second frame 3.

Slack insulating fabric 5 allows the insulating fabric 5 to stay non-tensioned regardless the position of the damping device, i.e. regardless the gap height h between the first 2 and second 3 frame.

The insulating fabric 5 should resists forces, stresses such as pushes or pulls, in order to prevent it damaging due to external reasons. The insulating fabric 5 comprises preferably aromatic polyamide fibres.

Figures 4a-b show a damping device 4 used in the mounting structure 1. The damping device 4 comprises two holder members for receiving damping elements. The first holder member 13 comprises a bottom wall 14 and a surrounding side wall 15 up-standing from the bottom wall 14. The second holder member 16 comprises a bottom wall 17 and a surrounding side wall 18 up-standing from the bottom wall 17. The outer dimensions of the first holder member 13 are smaller than the inner dimensions of the second holder member 16 allowing the first holder member 13 to be fitted partially inside the second holder member 16. The open ends of the first 19 and the second holder members 20 are arranged opposite to each other. A first damping element 21 is fitted inside the first holder member 13 with its first end 22a fixed to the bottom wall 14. The second end 22b of the first damping element 21 is fixed to the bottom wall 17 of the second holder member 16. The height L1 of the first damping element 21 is greater than the height L2 of the side wall of the first holder member 13, i.e. the damping element 21 creates a distance between the side wall 15 of the first holder member 13 and the bottom 17 of the second holder member 16.

The bottom walls 14,17 of the first holder member 13 and the second holder member 16 comprise fixing points 23, e.g. a hole and sleeve for a screw joint. The first holder member 13 is fixed to the first frame 2 and the second holder member 16 is fixed to the second frame 3.

In the Figures the first 13 and the second 16 holder member comprise a rectangular shaped bottom and a rectangular shaped side walls. The sides of the bottom are of equal length. The shape of the bottom can also be a circle, for instance.

The flexible first damping element 21 fixed to the holder members 13, 16 from its ends 22a-b allows the holder members 13,16 to move in relation to each other until the tilting limit is reached. The side walls 15, 18 of the holder members 13, 16 spaced at a distance and placed within each other limit the tilt between the first 2 and the second 3 frame. When the damping device 4 is at the maximum tilt position the outer surface of the side wall 15 of the first holder member 13 hits the inner surface of the side wall 18 of the second holder member 16 stopping the relative movement of the first and second holder member.

When the damping device 4 is at the maximum tilt position the outer surface of the side wall 15 of the first holder member 13 hits the inner surface of the side wall 18 of the second holder member 16. The maximum tilt position of the damping device corresponds the maximum height of the gap h between the first 2 and the second frame 3. The height of the insulating fabric 5 is preferably 1,1 - 1,5 times greater the maximum height of the gap h between the first 2 and the second frame 3.

In the Figures the first damping element 21 comprises a cylindrical hollow body. The fixing points 23 provided for fixing the holder members 13, 16 to the frames 2, 3 are inside the cylindrical hollow body in radial direction r.

The material of the first damping element 21 is preferably natural rubber which features low compression set, high tensile strength, resilience, abrasion and tear resistance, good friction characteristics, excellent bonding capabilities to metal substrate, and good vibration dampening characteristics.

A second damping element 24 is attached to the surface of the side wall 18 of the second holder member 16 facing the side wall 15 of the first holder member 13.

The second damping element 24 is suppressing vibration and also preventing noise generation in the damping device 4. The first 13 and the second holder members 16 of the damping device are preferably made of steel. When the damping device 4 tilts the outer surface of the side wall 15 of the first holder member 13 hits the inner surface of the side wall 18 of the second holder member 16. As the inner surface of the second holder member 16 is covered with the second damping element 24 it dampens the clacking sound. The second damping element 24 comprises preferably strip-like damping material. The material of the second element is preferably ethylene propylene diene monomer rubber, EPDM rubber, which has an excellent weather and ozone resistance.

The damping elements 21, 24 are glued on place to the first 13 and second 16 holder members using a glue together with a heating and pressing process.

The mounting structure 1 can be manufactured with a method of manufacturing a first frame 2 and a second frame 3 and at least one damping device 4. The manufactured damping element 4 comprises a tilt limiting arrangement for limiting the tilt between the first 2 and the second 3 frame. The damping device 4 and an insulating fabric 5 are fitted between the first 2 and the second frame 3. The damping device 4 and the insulating fabric 5 are attached to the first frame 2 and to the second frame 3. The damping device 4 can be attached to the frames 2, 3 using its fixing points 23 for a screw joint, for instance. The insulation fabric 5 can be attached to the frames 2, 3 by pressing the fabric 5 between a flat iron bar and the frame 2, 3 and then securing the flat iron bar and the frame 2, 3 together by pop rivets installed to holes made to the frames 2, 3 and the flat iron bar. The insulating fabric 5 is configured to stay non-tensioned by providing a surplus length of insulating fabric 5 allowing the insulating fabric 5 to stay loose regardless of the movements of the damping device 4.

The mounting structure 1 can be manufactured separately from the cooling unit 6 and the electrical machine 12. The mounting structure 1 forms a sub-assembled component. It is installed to the electrical machine 12 and to the cooling unit 6 in the assembly phase. Thus the mounting structure 1 reduces the stages of manufacture and manufacturing costs in the electrical machine 12 manufacturing.

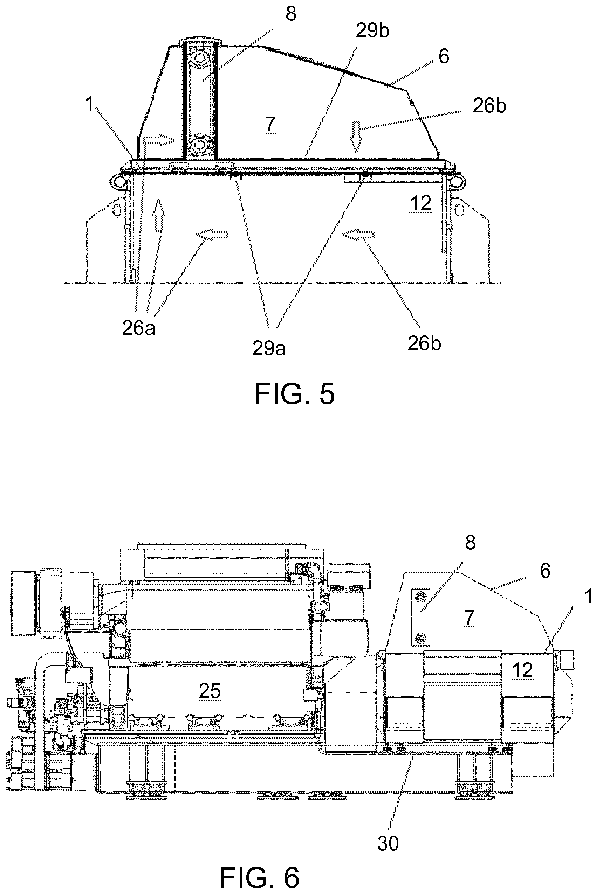

Figure 5 shows the cooling unit 6 with the mounting structure 1 connected to an electrical machine 12. The mounting structure 1 is attached to the cooling unit 6 and to the electrical machine 12 using its fastening points 29a-b for a bolted or screw joint, for instance. The second frame 3 of the mounting structure 1 comprises holes in its fastening points 29b and it is attached to the housing 7 of the cooling unit 6 using screw joints. The first frame 2 of the mounting structure 1 comprises holes in its fastening points 29a and it is attached to the electrical machine 12 using screw joints. The fastening points 29a-b can comprise also lugs or brackets.

The cooling fluid 26a circulates in a closed circuit through the active parts of the electrical machine 12 and then through the heat exchanger 8. The air circulation is asymmetric in the electrical machine 12.

The mounting structure 1 for a cooling unit 6 of an electrical machine 12 for reducing vibration can be used in several types of electrical machines and in many applications comprising electrical machines. The term electrical machine comprises motors and generators. One application is an electrical generator connected to a diesel engine 25 where the diesel engine 25 and the electrical generator 12 share a mounting plate 30 as shown in Figure 6. In this marine application, the mounting structure 1 significantly reduces the transmission of vibration, caused by the electrical machine 12 and a diesel engine 26, to vibrations in the cooling unit housing 7 and in the heat exchanger 8, and, as a result, to noise in the cooling unit and air.

It will be obvious to a person skilled in the art that, as the technology advances, the inventive concept can be implemented in various ways. The invention and its embodiments are not limited to the examples described above but may vary within the scope of the claims.

Part list: 1 a mounting structure, 2 a first frame, 3 a second frame, 4 a damping device, 5, 5a an insulating fabric, 6 a cooling unit, 7 a housing, 8 a heat exchanger, 9 an inlet and an outlet of heat exchanger, 10 a carrier beam, 11 a-b a frame side, 12 an electrical machine, 13 a first holder member, 14 a bottom wall, 15 a side wall, 16 a second holder member, 17 a bottom wall, 18 a side wall, 19 an open end of a first holder member, 20 an open end of a second holder member, 21 a first damping element, 22a-b an end of damping element, 23 a fixing point, 24 a second damping element, 25 a diesel engine, 26a-b cooling fluid, 27a-b channel, 28 fixing beam, 29a-b fastening point, 30 mounting plate.

h a gap height, L1 a height of damping element, L2 a height of side wall, r radial direction.

## Claims

1. A mounting structure in a cooling unit of an electrical machine for reducing vibration, wherein the mounting structure (1) comprises a first frame (2), a second frame (3), at least one damping device (4), and an insulating fabric (5) configured to stay non-tensioned, the damping device (4) and the insulating fabric (5) are fitted between the first (2) and the second frame (3), and the damping device (4) and the insulating fabric (5) are attached to the first frame (2) and to the second frame (3), the insulating fabric (5) is non-load bearing, the damping device (4) is forming a flexible connection between the first (2) and the second (3) frame and is capable of limiting tilt between the first (2) and the second (3) frame.

2. The mounting structure according to claim 1, **characterized in that** the damping device (4) comprises a first (13) and a second holder member (16), the first and second holder members comprising a bottom wall (14, 17) and side wall (15, 18) upstanding from the bottom wall (14,17), the open ends (19,20) of the first and the second holder members (13,16) are arranged opposite to each other, the first holder member (13) is fitted at least partially inside the second holder member (16),and a first damping element (21) is fixed to the bottom wall (14) of the first holder member (13) and to the bottom wall (17) of the second holder member (16).

3. The mounting structure as claimed in any one of claims 1 to 2, **characterized in that** the damping device (4) comprises a second damping element (24) attached to the surface of the side wall (18) of the second holder member (16) facing the side wall (15) of the first holder member (13).

4. The mounting structure as claimed in any one of claims 2 to 3, **characterized in that** the first damping element (21) comprises a cylindrical hollow body and the second damping element (24) comprises a damping strip.

5. The mounting structure as claimed in any one of claims 2 to 4, **characterized in that** the first (13) and the second (16) holder member comprise a rectangular bottom wall (14,17) and rectangular side walls (15,18).

6. The mounting structure as claimed in any one of claims 2 to 5, **characterized in that** the side wall (15) of the first holder member (13) and the side wall (18) of the second holder member (16) are spaced at a distance to limit the tilt between the first (2) and the second (3) frame.

7. The mounting structure as claimed in any one of claims 1 to 6, **characterized in that** the height of the insulating fabric (5) is 1,1..1,5 times greater than the maximum height of the gap (h) between the first (2) and the second frame (3).

8. The mounting structure as claimed in any one of claims 1 to 7, **characterized in that** the first (2) and/or the second frame (3) comprise a carrier beam (10) extending between the two sides of the first (2) or second (3) frame for carrying a heat exchanger (8) of the cooling unit (6).

9. The mounting structure as claimed in any one of claims 1 to 8, **characterized in that** the mounting structure comprises eight pieces of damping devices (4).

10. The mounting structure as claimed in any one of claims 2 to 10, **characterized in that** the first damping element (21) comprises natural rubber and the second damping element (24) comprises ethylene propylene diene monomer rubber.

11. The mounting structure as claimed in any one of claims 1 to 10, **characterized in that** the insulating fabric (5) comprises aromatic polyamide fibres.

12. A method for manufacturing a mounting structure in a cooling unit of an electrical machine for reducing vibration, **characterized in that** the method comprises manufacturing a first frame (2) and a second frame (3), manufacturing at least one damping device (4) comprising a tilt limiting arrangement for limiting the tilt between the first (2) and the second (3) frame, fitting the damping device (4) and an insulating fabric (5) between the first (2) and the second frame (3), and attaching the damping device (4) and the insulating fabric (5) to the first frame (2) and to the second frame (3), and configuring the non-load bearing insulating fabric (5) to stay non-tensioned.

13. An electrical machine comprising a mounting structure as claimed in any one of claims 1 to 11, **characterized in that** the first frame (2) is attached to a frame of the electrical machine (12) and the second frame (3) is attached to a housing of the cooling unit (7).

14. The electrical machine according to claim 13, **characterized in that** the electrical machine (12) is an electrical generator connected to a diesel engine (25).

## Patentansprüche

1. Halterung in einer Kühleinheit einer elektrischen Anlage zur Reduzierung von Schwingungen, wobei die Halterung (1) einen ersten Rahmen (2), einen zweiten Rahmen (3), mindestens eine Dämpfungseinrichtung (4) und ein isolierendes Gewebe (5) aufweist, das geeignet ist, ungespannt zu bleiben, wobei die Dämpfungseinrichtung (4) und das isolierende Gewebe (5) zwischen dem ersten (2) und dem zweiten Rahmen (3) passgenau angeordnet sind, und die Dämpfungseinrichtung (4) und das isolierende Gewebe (5) an dem ersten Rahmen (2) und dem zweiten Rahmen (3) befestigt sind, wobei das isolierende Gewebe (5) nicht lasttragend ist, die Dämpfungseinrichtung (4) eine flexible Verbindung zwischen dem ersten (2) und dem zweiten (3) Rahmen bildet und in der Lage ist, eine Neigung zwischen dem ersten (2) und dem zweiten (3) Rahmen zu begrenzen.

2. Halterung nach Anspruch 1, **dadurch gekennzeichnet, dass** die Dämpfungseinrichtung (4) ein erstes (13) und ein zweites Halteelement (16) aufweist, wobei das erste und das zweite Halteelement eine Bodenwand (14, 17) und eine Seitenwand (15, 18), die auf der Bodenwand (14, 17) steht, aufweisen,
die offenen Enden (19, 20) des ersten und des zweiten Halteelements (13, 16) einander gegenüberliegend angeordnet sind,
das erste Halteelement (13) zumindest teilweise in das zweite Halteelement (16) eingepasst ist, und
ein erstes Dämpfungselement (21) an der Bodenwand (14) des ersten Halteelements (13) und an der Bodenwand (17) des zweiten Halteelements (16) befestigt ist.

3. Halterung nach Anspruch 1 oder 2, **dadurch gekennzeichnet, dass** die Dämpfungseinrichtung (4) ein zweites Dämpfungselement (24) aufweist, das an der Oberfläche der Seitenwand (18) des zweiten Halteelements (16), die der Seitenwand (15) des ersten Halteelements (13) zugewandt ist, angebracht ist.

4. Halterung nach Anspruch 2 oder 3, **dadurch gekennzeichnet, dass** das erste Dämpfungselement (21) einen zylindrischen Hohlkörper und das zweite Dämpfungselement (24) einen Dämpfungsstreifen aufweist.

5. Haltestruktur nach einem der Ansprüche 2 bis 4, **dadurch gekennzeichnet, dass** das erste (13) und das zweite (16) Halteelement eine rechteckige Bodenwand (14, 17) und rechteckige Seitenwände (15, 18) aufweisen.

6. Haltestruktur nach einem der Ansprüche 2 bis 5, **dadurch gekennzeichnet, dass** die Seitenwand (15) des ersten Halteelements (13) und die Seitenwand (18) des zweiten Halteelements (16) derart beabstandet sind, dass die Neigung zwischen dem ersten (2) und dem zweiten (3) Rahmen begrenzt wird.

7. Halterung nach einem der Ansprüche 1 bis 6, **dadurch gekennzeichnet, dass** die Höhe des isolierenden Gewebes (5) 1,1...1,5 mal größer als die maximale Höhe des Spalts (h) zwischen dem ersten (2) und dem zweiten Rahmen (3) ist.

8. Halterung nach einem der Ansprüche 1 bis 7, **dadurch gekennzeichnet, dass** der erste (2) und/oder der zweite Rahmen (3) einen Träger (10) aufweisen, der sich zwischen den zwei Seiten des ersten (2) oder des zweiten (3) Rahmens zum Tragen eines Wärmetauschers (8) der Kühleinheit (6) erstreckt.

9. Halterung nach einem der Ansprüche 1 bis 8, **dadurch gekennzeichnet, dass** die Halterung acht einzelne Dämpfungseinrichtungen (4) aufweist.

10. Halterung nach einem der Ansprüche 2 bis 10, **dadurch gekennzeichnet, dass** das erste Dämpfungselement (21) Naturgummi und das zweite Dämpfungselement (24) einen Ethylen-Propylen-Dien-Monomer-Gummi aufweist.

11. Halterung nach einem der Ansprüche 1 bis 10, **dadurch gekennzeichnet, dass** das isolierende Gewebe (5) Fasern aus aromatischem Polyamid aufweist.

12. Verfahren zur Herstellung einer Halterung in einer Kühleinheit einer elektrischen Anlage zum Reduzieren von Schwingungen, **dadurch gekennzeichnet, dass** das Verfahren umfasst
Herstellen eines ersten Rahmens (2) und eines zweiten Rahmens (3),
Herstellen mindestens einer Dämpfungseinrichtung (4) mit einer Neigungsbegrenzungsanordnung zur Begrenzung der Neigung zwischen dem ersten (2) und dem zweiten (3) Rahmen,
Einpassen der Dämpfungseinrichtung (4) und eines isolierenden Gewebes (5) zwischen dem ersten (2) und dem zweiten Rahmen (3) und
Befestigen der Dämpfungseinrichtung (4) und des isolierenden Gewebes (5) an dem ersten Rahmen (2) und an dem zweiten Rahmen (3) und Anordnen des nicht-lasttragenden isolierenden Gewebes (5) derart, dass es ungespannt bleibt.

13. Elektrische Anlage mit einer Halterung nach einem der Ansprüche 1 bis 11, **dadurch gekennzeichnet, dass** der erste Rahmen (2) an einem Rahmen der elektrischen Anlage (12) und der zweite Rahmen (3) an einem Gehäuse der Kühleinheit (7) befestigt ist.

14. Elektrische Anlage nach Anspruch 13, **dadurch gekennzeichnet, dass** die elektrische Anlage (12) ein elektrischer Generator ist, der mit einem Dieselmotor (25) verbunden ist.

## Revendications

1. Structure de montage dans une unité de refroidissement d'une machine électrique pour réduisant les vibrations, dans lequel la structure de montage (1) comprend un premier cadre (2), un second cadre (3), au moins un dispositif d'amortissement (4) et un tissu isolant (5) conçu pour rester non tendu, le dispositif d'amortissement (4) et le tissu isolant (5) sont montés entre le premier cadre (2) et le second cadre (3), et le dispositif d'amortissement (4) et le tissu isolant (5) sont fixés au premier cadre (2) et au second cadre (3), le tissu isolant (5) étant non porteur de charge, le dispositif d'amortissement (4) formant une liaison flexible entre le premier cadre (2) et le second cadre (3) et est capable de limiter l'inclinaison entre le premier cadre (2) et le second cadre (3).

2. Structure de montage selon la revendication 1, **caractérisée en ce que** le dispositif d'amortissement (4) comprend un premier élément de support (13) et un second élément de support (16), le premier élément de support et le second élément de support comprenant une paroi inférieure (14, 17) et une paroi latérale (15, 18) dirigée vers le haut depuis la paroi inférieure (14, 17), les extrémités ouvertes (19, 20) du premier élément de support et du second élément de support (13, 16) sont disposés en face l'un à l'autre, le premier élément de support (13) est monté au moins partiellement à l'intérieur du second élément de support (16), et un premier élément d'amortissement (21) est fixé à la paroi inférieure (14) du premier élément de support (13) et à la paroi inférieure (17) du second élément de support (16).

3. Structure de montage selon l'une des revendications 1 ou 2, **caractérisée en ce que** le dispositif d'amortissement (4) comprend un second élément d'amortissement (24) fixé à la surface de la paroi latérale (18) du second élément de support (16) faisant face à la paroi latérale (15) du premier élément de support (13).

4. Structure de montage selon l'une des revendications 2 ou 3, **caractérisée en ce que** le premier élément d'amortissement (21) comprend un corps creux cylindrique et le second élément d'amortissement (24) comporte une bande d'amortissement.

5. Structure de montage selon l'une des revendications 2 à 4, **caractérisée en ce que** le premier élément de support (13) et le second (16) élément de support comprennent une paroi de fond rectangulaire (14, 17) et des parois latérales rectangulaires (15, 18).

6. Structure de montage selon l'une des revendications 2 à 5, **caractérisée en ce que** la paroi latérale (15) du premier élément de support (13) et la paroi latérale (18) du second élément de support (16) est espacée à distance pour limiter l'inclinaison entre le premier cadre (2) et le second cadre (3).

7. Structure de montage selon l'une des revendications 1 à 6, **caractérisé en ce que** la hauteur du tissu isolant (5) est de 1,1-1,5 fois supérieure à la hauteur maximale de la fente (h) entre le premier cadre (2) et le second cadre (3).

8. Structure de montage selon l'une des revendications 1 à 7, **caractérisée en ce que** le premier cadre (2) et/ou le second cadre (3) comprennent un poutre porteuse (10) s'étendant entre les deux côtés du premier cadre (2) ou du second cadre (3) pour transporter un échangeur thermique (8) de l'unité de refroidissement (6).

9. Structure de montage selon l'une des revendications 1 à 8, **caractérisée en ce que** la structure de montage comprend huit pièces de dispositifs d'amortissement (4).

10. Structure de montage selon l'une des revendications 2 à 10, **caractérisée en ce que** le premier élément d'amortissement (21) comprend du caoutchouc naturel et le second élément d'amortissement (24) comprend du caoutchouc monomère diénique d'éthylène propylène.

11. Structure de montage selon l'une des revendications 1 à 10, **caractérisée en ce que** le tissu isolant (5) comprend des fibres de polyamides aromatiques.

12. Procédé de fabrication d'une structure de montage dans une unité de refroidissement d'une machine électrique pour réduire les vibrations, **caractérisé en ce que** le procédé consiste à fabriquer un premier cadre (2) et un second cadre (3), à réaliser au moins un dispositif d'amortissement (4) comprenant un agencement limitant l'inclinaison pour limiter l'inclinaison entre le premier cadre (2) et le second cadre (3), en posant le dispositif d'amortissement (4) et un tissu isolant (5) entre le premier cadre (2) et le second cadre (3) et en fixant le dispositif d'amortissement (4) et le tissu isolant (5) au premier cadre (2) et au second cadre (3) et configurer le tissu isolant (5) non-porteur de charge pour rester non tendu.

13. Machine électrique comprenant une structure de montage telle que revendiquée selon l'une quelconque des revendications 1 à 11, **caractérisée en ce que** le premier cadre (2) est fixé à un cadre de la machine électrique (12) et le second cadre (3) est fixé à un boîtier de l'unité de refroidissement (7).

14. Machine électrique selon la revendication 13, **caractérisée en ce que** la machine électrique (12) est un générateur électrique relié à un moteur diesel (25).
